# EUROPEAN PATENT APPLICATION

(11) **EP 1 643 789 A2**
(43) Date of publication of application: **05.04.2006**
(21) Application number: 05109082.7
(22) Date of filing: 30.09.2005
(51) Int. Cl.: H04Q 7/38

(54) **Mobile communication terminal and corresponding control method**

(30) Priority: 01.10.2004 KR 2004078478
(71) Applicant: Samsung Electronics Co., Ltd., Suwon-si, Gyeonggi-Do (KR)
(72) Inventor: Cho, Ki Ho, Gyeonggi-do (KR); Kim, Chang Young, Seoul (KR)
(74) Representative: Grünecker, Kinkeldey, Stockmair & Schwanhäusser Anwaltssozietät

(57) **Abstract**

A mobile communication terminal and a control method thereof are provided, where a plurality of antennas receives signals from systems having different frequency bands and a plurality of system modems communicates with the systems having the different frequency bands, respectively. A switching unit positioned between the plurality of antennas and the plurality of system modems selectively connects the plurality of antennas with the plurality of system modems. In a handover between the systems having the different frequency bands, a controller controls the switching unit to connect the system modem of a handed-over system to a predetermined one of the plurality of antennas.

## Description

### BACKGROUND OF THE INVENTION

### Field of the Invention:

The present invention relates to a mobile communication terminal and a control method thereof. More specifically, the present invention relates to a mobile communication terminal and a control method thereof in which a plurality of antennas are installed onto a mobile terminal capable of communicating with an international mobile telecommunication-2000 (IMT-2000) type wideband code division multiple access (WCDMA) network and a second generation (2G) code division multiple access (CDMA) network to control such that an antenna having excellent reception performance among the plurality of antennas is switched to a handed-over system modem within the terminal in handover between networks.

### Description of the Related Art:

In general, due to the economic burden of commercializing a WCDMA network, it is expected that WCDMA network systems providing WCDMA service in respective service areas will not be installed all at once but rather gradually beginning with certain principle areas.

Such a network installation plan has the drawback of service unavailability when a WCDMA terminal is outside of a service area. Accordingly, until WCDMA service is available nationwide, WCDMA terminals outside of a service area have to transition to an established mobile communication network to receive service. This is called a handover between the WCDMA network and a CMDA network.

Such a handover has the following requirements.

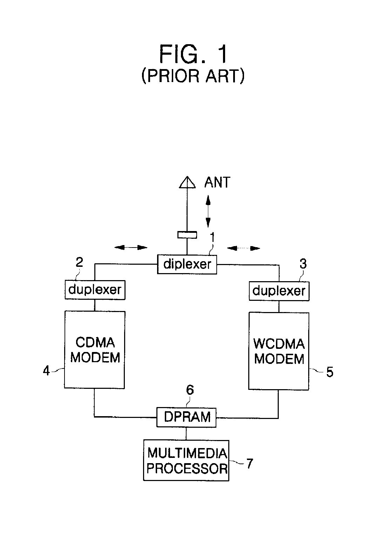

First, the terminal must be capable of connecting to and communicating with both a WCDMA system and a CDMA system simultaneously. The type of terminal is called a multi-mode multi-band (MMMB) terminal. A structure of the MMMB terminal is shown in Fig. 1 and will be described below.

As shown in Fig. 1, the MMMB terminal comprises a WCDMA modem and a CDMA modem.

Second, the terminal or system must be able to detect when the terminal is located at a WCDMA service area boundary.

Third, when at the WCDMA service area boundary, the terminal must be able to perform a handover according to a WCDMA-to-CDMA handover procedure in order to continue to receive stable service.

Fourth, the mobile communication network must be able to quickly transmit a paging message and connect a call with the terminal regardless of what system the terminal is operating in.

Hereinafter, a structure of a conventional mobile communication terminal capable of performing a WCDMA-to-CDMA handover will be described with reference to Fig. 1.

Fig. 1 is schematic diagram illustrating the conventional mobile communication terminal for concurrently communicating WCDMA and CDMA signals.

As shown in Fig. 1, the terminal comprises an external antenna (ANT), a diplexer 1, duplexers 2 and 3, a CDMA modem 4, a WCDMA modem 5, a dual port random access memory (DPRAM) 6, and a multimedia processor 7.

The diplexer 1 receives signals through the external antenna (ANT), separates the received signals into a WCDMA band and a CDMA band, and respectively provides the signals to the CDMA modem 4 and the WCDMA modem 5 through the duplexers 2 and 3, respectively.

The CDMA and WCDMA modems 4 and 5 receive the signals through the duplexers 2 and 3 respectively and process the received signals corresponding to their own respective frequencies under the control of the multimedia processor 7.

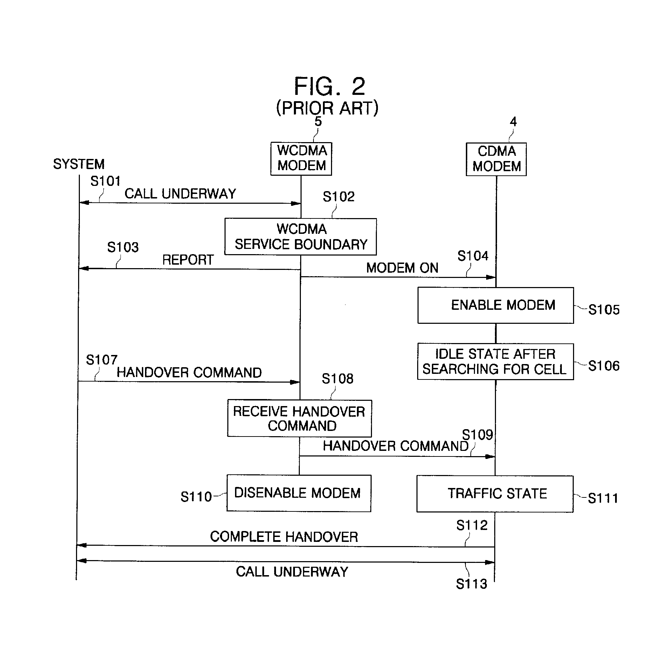

Stepwise operations of the above-described terminal in the WCDMA-to-CDMA handover will be described in greater detail with reference to Fig. 2.

As shown in Fig. 2, first, during a call by using the WCDMA modem of the terminal at step S101, when the WCDMA modem 5 detects (recognizes) a boundary between the WCDMA network and the CDMA network at step S102, the WCDMA modem 5 provides a WCDMA boundary recognition message, in other words, a message for requesting handover to the CDMA network, to a system, such as a network system comprising a base station, a base station controller, and the like, at step S103.

Further, the WCDMA modem 5 provides a signal for enabling the CDMA modem 4 to the CDMA modem 4 through the multimedia processor 7 and enables the CDMA modem 4 at steps S104 and S105. Accordingly, the CDMA modem 4 searches for the best cell and then enters an idle state at step S106.

Meanwhile, if the system transmits a handover command message to the WCDMA modem 5 at step S107, the WCDMA modem 5 receives the handover command message from the system at step S108, transmits it to the CDMA modem 4 at step S109, and is disenabled at step S110.

After the CDMA modem 4 receives the handover command message and establishes a traffic channel with the system at step S111, it transmits a handover completion message to the system at step S112, thereby transferring the call to the traffic channel between the system and the CDMA modem 4 while maintaining the call connection at step S113.

As a result, in the WCDMA-to-CDMA handover, if the terminal is at the WCDMA service area boundary, the CDMA modem 4 is enabled and located in a cell where a signal of at least a suitable intensity is generated. Subsequently, in response to a system handover command, the CDMA modem 4 is connected with the cell, the call is switched to the CDMA modem 4, and the WCDMA modem 5 is disenabled.

As shown in Fig. 2, in a concurrent communication period, the WCDMA modem 5 and the CDMA modem 4 of the terminal are connected to and communicate with the WCDMA system and the CDMA system, respectively.

The terminal shown in Fig. 2 divides the received signal based on system frequency using the diplexer. As the frequencies to be separated are distant from each other, the diplexer has excellent performance.

For example, since SK Telecom Co., Ltd., a telecommunication service provider uses a frequency band around 800MHz in CDMA and a frequency band around 2GHz in WCDMA, the diplexer can separate the frequencies and the terminal having the structure shown in Fig. 2 can be used to concurrently communicate WCDMA and CDMA signals. However, KTF Co., Ltd., another telecommunication service provider, uses a frequency band around 1.8GHz in CDMA and a frequency band around 2 GHz in WCDMA, and there is no diplexer capable of separating these two frequency bands. Further, even if a new component is developed, its thickness will be approximately 1 cm, which will enlarge the size of terminal and decrease its marketability.

### SUMMARY OF THE INVENTION

Accordingly, an object of the present invention is to provide a mobile communication terminal capable of simultaneously receiving Wideband Code Division Multiple Access (WCDMA) and Code Division Multiple Access (CDMA) signals using an internal antenna and an external antenna.

Another object of the present invention is to provide a mobile communication terminal and a control method thereof for preventing deterioration of the reception performance of an internal antenna by switching between internal/external antennas in a WCDMA-to-CDMA handover.

According to an aspect of an exemplary embodiment of the present invention, a mobile communication terminal is provided. The terminal comprises a plurality of antennas for receiving signals from systems having different frequency bands, a plurality of system modems for communicating with the systems having the different frequency bands, respectively, a switching unit positioned between the plurality of antennas and the plurality of system modems, and selectively connecting the plurality of antennas with the plurality of system modems, and a controller for, in a handover between the systems having the different frequency bands, controlling the switching unit to connect the system modem of a handed-over system to a predetermined one of the plurality of antennas.

The switching unit may comprise a crossbar switch comprising an on/off switch, and the plurality of system modems may comprise a WCDMA modem for communicating with a WCDMA network system and a CDMA modem for communicating with a CDMA network system.

When the WCDMA modem detects a WCDMA service boundary area during a WCDMA communication, it may transmit a handover request message to the WCDMA network system and a modem-on message to the CDMA modem so that, upon receipt of a handover command message from the WCDMA network system, the WCDMA modem transmits the received handover command message to the CDMA modem and then is disenabled.

After the CDMA modem receives the modem-on message from the WCDMA modem and is enabled to search for the best cell and wait in an idle state, it may establish a traffic channel with the CDMA network system through a network in response to the handover command message provided from the WCDMA modem and communicate with the CDMA system through the network.

The plurality of antennas may have the same or different reception performance and be installed inside and outside of the mobile communication terminal.

The predetermined antenna may be an external antenna.

According to another aspect of an exemplary embodiment of the present invention, a mobile communication terminal is provided. The mobile communication terminal comprises system modems for communicating with respective systems having different frequency bands, and a plurality of antennas respectively connected to the system modems for receiving a signal of a corresponding frequency band and providing the received signal to a corresponding modem.

The plurality of antennas may be installed inside and outside of a terminal case.

Each of the system modems having the different frequency bands may comprise a WCDMA modem for communicating with a system having a WCDMA frequency band, and a CDMA modem for communicating with a system having a CDMA frequency band.

The WCDMA modem may be connected with an external antenna, and the CDMA modem may be connected with an internal antenna.

The terminal may further comprise a controller for connecting the WCDMA modem with the internal antenna and connecting the CDMA modem with the external antenna in a handover from the system having the WCDMA frequency band to the system having the CDMA frequency band.

According to yet another aspect of an exemplary embodiment of the present invention, a method is provided for controlling antenna switching in a mobile communication terminal having a plurality of antennas. The method comprises when the terminal enters a service area of a second mobile communication system having a different frequency band while it communicates with a first mobile communication system by using a first communication modem, enabling a second communication modem for communicating with the second mobile communication system and establishing a traffic channel with the second mobile communication system, and controlling antenna switching so that a first antenna having superior reception performance among the plurality of antennas is connected to the enabled second communication modem, and a second antenna having a lower reception performance than the first antenna is connected to the first communication modem.

The first modem may be a WCDMA modem and the second modem a CDMA modem, and the first mobile communication system may be a WCDMA system and the second mobile communication system a CDMA system.

The switching between the first and second antennas may be performed by using a crossbar switch which comprises a plurality of on/off switches.

The plurality of antennas may have the same or different reception performance and be installed inside and outside of the mobile communication terminal.

According to yet another aspect of an exemplary embodiment of the present invention, a method is provided for controlling antenna switching in a mobile communication terminal having a plurality of system modems for communicating with respective systems having different frequency bands, and a plurality of antennas for receiving different frequency band signals and providing the received frequency band signals to the respective system modems. The method comprises, when a first system modem undergoing communication determines that a current location of the terminal is in a boundary area of a service frequency band of a first mobile communication system, transmitting a handover request message to the first mobile communication system and transmitting a modem-on message to a second system modem through a network, and in the second system modem, receiving the modem-on message, searching for a best cell, establishing a traffic channel with the second mobile communication system through a network in response to a handover command provided from the first mobile communication system, and controlling antenna switching so that an established first antenna having superior reception performance among the plurality of antennas is switched to the second system modem.

In controlling the antenna switching, a second antenna having a lower reception performance than the first antenna may be switched to the first system modem.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings:
Fig. 1 is a schematic diagram illustrating a conventional terminal capable of simultaneously communicating Wideband Code Division Multiple Access (WCDMA) and Code Division Multiple Access (CDMA) signals;
Fig. 2 is a flowchart illustrating operation of the terminal in a handover from a WCDMA network to a CDMA network;
Fig. 3 is schematic diagram illustrating a structure of a mobile communication terminal according to an exemplary embodiment of the present invention;
Fig. 4 is a schematic diagram illustrating a structure of a mobile communication terminal according to an exemplary embodiment of the present invention;
Fig. 5 is a diagram illustrating a structure of a crossbar switch according to an exemplary embodiment of the present invention; and
Fig. 6 is a flowchart illustrating internal operation in a handover of a mobile communication terminal according to an exemplary embodiment of the present invention.

Throughout the drawings, like reference numerals will be understood to refer to like parts, components and structures.

### DETAILED DESCRIPTION OF EXEMPLARY EMBODIMENTS

The present invention will now be described in greater detail with reference to the accompanying drawings, in which exemplary embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. In the drawings, as noted above, whenever the same element reappears in a subsequent drawing, it is denoted by the same reference numeral.

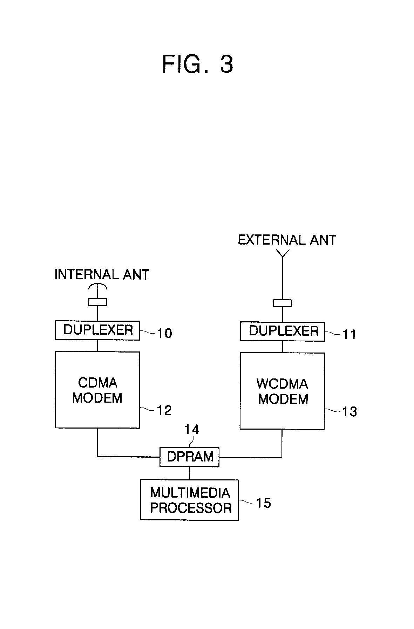

Fig. 3 is a schematic diagram illustrating a structure of a mobile communication terminal according to an exemplary embodiment of the present invention.

As shown in Fig. 3, the mobile communication terminal comprises an internal antenna, an external antenna, duplexers 10 and 11, a code division multiple access (CDMA) modem 12, a wideband code division multiple access (WCDMA) modem 13, a dual port random access memory (DPRAM) 14 and a multimedia processor 15.

The internal antenna is installed inside of a terminal case so that it cannot be seen from the outside, and the external antenna is constructed to protrude outward such as a conventional terminal antenna. The internal and external antennas can be constructed in position and structure to minimize signal interference between them.

In other words, the internal antenna is connected to the CDMA modem 12 through the duplexer 10 and receives and provides a CDMA network frequency band signal to the CDMA modem 12 through the duplexer 10.

The external antenna is connected to the WCDMA modem 13 through the duplexer 11 and receives and provides a WCDMA network frequency band signal to the WCDMA modem 13 through the duplexer 11.

The mobile communication terminal according to an exemplary embodiment of the present invention receives the CDMA frequency band signal and the WCDMA frequency band signal through the different antennas and thus has better reception performance than the conventional mobile communication terminal of Fig. 1.

The duplexers 10 and 11, the CDMA/WCDMA modems 12 and 13, the DPRAM 14, and the multimedia processor 15 each operate similar to that as in the conventional terminal of Fig. 1, and the terminal performs a handover from WCDMA to CDMA in a similar fashion as shown in Fig. 2.

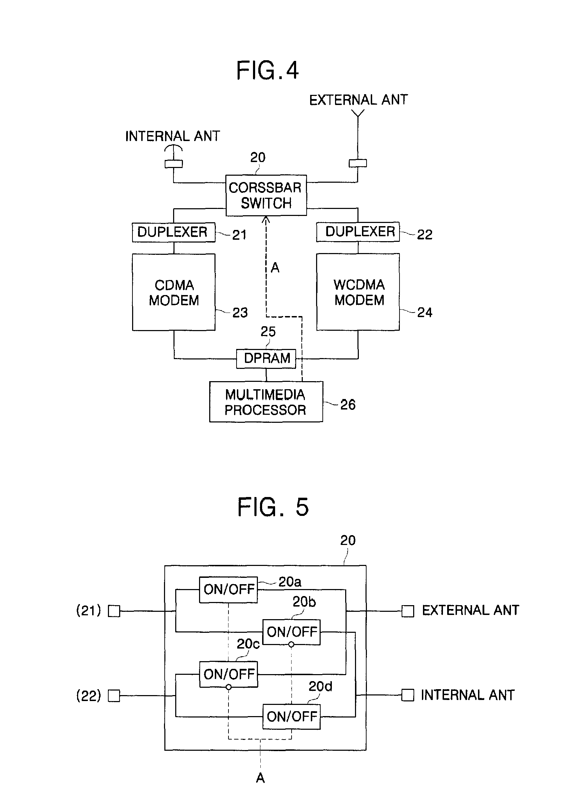

However, in a terminal, as shown for example in Fig. 3, poor internal antenna performance can be a problem. That is, since the reception performance of the internal antenna is worse than that of the external antenna, the terminal shown in Fig. 3 may have inferior reception performance in CDMA communication compared to the conventional terminal. To overcome this drawback, a mobile communication terminal according to an exemplary embodiment of the present invention, as shown in Fig. 4, is provided.

Fig. 4 is a schematic diagram illustrating a structure of a mobile communication terminal according to an exemplary embodiment of the present invention.

As shown in Fig. 4, the mobile communication terminal comprises an internal antenna, an external antenna, a crossbar switch 20, duplexers 21 and 22, a CDMA modem 23, a WCDMA modem 24, a DPRAM 25 and a multimedia processor 26.

The internal and external antennas are each connected to the crossbar switch 20, which is connected to each of the duplexers 21 and 22.

The crossbar switch 20 can be switched in response to a switching control signal provided from the multimedia processor 26 to connect the external antenna to a modem for transmitting a call traffic signal to a system through a network, such as the CDMA modem 23 or the WCDMA modem 24, and can receive the traffic signal from the CDMA modem 23 or the WCDMA modem 24. Meanwhile, the crossbar switch 20 can also be switched to connect the internal antenna with a modem for receiving the signal. Thus, since the external antenna has better reception performance than the internal antenna, the external antenna can be switched to the modem for currently transmitting the call traffic signal to provide better reception performance. According to an exemplary implementation, the internal and external antennas, which are otherwise the same, have different reception performance owing only to their different installation positions.

The multimedia processor 26 determines the modem for currently transmitting the traffic signal, and provides the switching control signal to the crossbar switch 20 to enable the crossbar switch 20 so that the external antenna is connected to the modem for transmitting the traffic signal, such as the WCDMA modem 24. In response to switching of the crossbar switch 20, the external antenna is connected with the WCDMA modem 24 through the duplexer 22, and the internal antenna is connected to the CDMA modem 23 through the duplexer 21.

Further, when the WCDMA modem 24 detects a WCDMA service boundary during a call, the handover to the CDMA network is performed, and the multimedia processor 26 transmits the switching control signal to the crossbar switch 20 and switches the external antenna to the CDMA modem 23 to enable the CDMA modem 23 in response to a system handover command.

The crossbar switch 20 can have various designs as long as a path to the CDMA modem 23 and a path to the WCDMA modem 24 are maintained separately. However, in an exemplary embodiment of the present invention illustrated in Fig. 5, the crossbar switch 20 may comprise four on/off switches 20a through 20d.

As shown in Fig. 5, the crossbar switch 20 may comprise four on/off switches 20a through 20d. When the on/off switch 20a is turned on and the on/off switch 20b is turned off in response to the control signal provided from the multimedia processor 26, the on/off switch 20c is turned off and the on/off switch 20d is turned on to connect the external antenna to the CDMA modem 23 through the duplexer 21 and connect the internal antenna to the WCDMA modem 24 through the duplexer 22.

On the other hand, when the on/off switch 20a is turned off and the on/off switch 20b is turned on depending on the control signal provided from the multimedia processor 26, the on/off switch 20c is turned on and the on/off switch 20d is turned off to connect the external antenna to the WCDMA modem 24 through the duplexer 22 and connect the internal antenna to the CDMA modem 23 through the duplexer 21.

As a result, a basic state of the crossbar switch 20 in which the external and internal antennas are connected to the WCDMA modem 24 and the CDMA modem 23 in response to the control signal of the multimedia processor 26 changes in response to the control signal of the multimedia processor 26 when the terminal crosses a WCDMA boundary and is handed over to the CDMA network. In other words, in the WCDMA-to-CDMA handover, the multimedia processor 26 controls the crossbar switch 20 to connect the external antenna to the CDMA modem 23 and the internal antenna to the WCDMA modem 24.

A control operation of the crossbar switch 20 of the above-described mobile communication terminal according to an exemplary embodiment of the present invention in a handover process will be described in detail.

First, when the WCDMA modem 24 detects that the terminal is in a WCDMA service boundary area during a call using the WCDMA modem 24, it transmits a handover request message to the system and simultaneously provides a message for enabling the CDMA modem 23 to the CDMA modem 23.

At this time, the multimedia processor 26 provides the switching control signal to the crossbar switch 20 to connect the external antenna to the WCDMA modem 24 and connect the internal antenna to the CDMA modem 23. In other words, in a WCDMA service area, the basic state can be maintained to always connect the external antenna to the WCDMA modem 24, and the multimedia processor 26 turns off the on/off switches 20a and 20d of the crossbar switch 20 and turns on the on/off switches 20b and 20c using the WCDMA modem 24 during the call so that the external antenna is connected with the WCDMA modem 24 and the internal antenna is connected to the CDMA modem 23.

The CDMA modem 23 is enabled in response to a modem-on message provided to the WCDMA modem 24, searches for the best cell, and enters an idle state.

Upon receipt of a handover command message from the system, the WCDMA modem 24 provides the received handover command message to the CDMA modem 23.

Accordingly, the CDMA modem 23 establishes a traffic channel with the system in response to the handover command message received from the WCDMA modem 24, and transmits a handover completion message to the system.

At this time, the multimedia processor 26 controls the crossbar switch 20 to connect the external antenna to the CDMA modem 23 and connect the internal antenna to the WCDMA modem 24.

In detail, the multimedia processor 26 turns on the on/off switches 20a and 20d and turns off the on/off switches 20b and 20c, thereby connecting the external antenna with the CDMA modem 23 and connecting the internal antenna with the WCDMA modem 24.

As a result, in an initial state in a WCDMA system, the crossbar switch 20 is enabled so that the external antenna is connected to the WCDMA modem 24 and the internal antenna is connected to the CDMA modem 23.

When there is a handover to the CDMA network, the WCDMA modem 24 is disenabled and the CDMA modem 23 is in a traffic state, thereby enabling communication of a voice traffic signal. The CDMA modem 23 transmits an internal state change message to the multimedia processor 26 which receives the internal message and provides the switching control signal to the crossbar switch 20 to connect the external antenna to the CDMA modem 23, thereby communicating the CDMA frequency band signal through the external antenna.

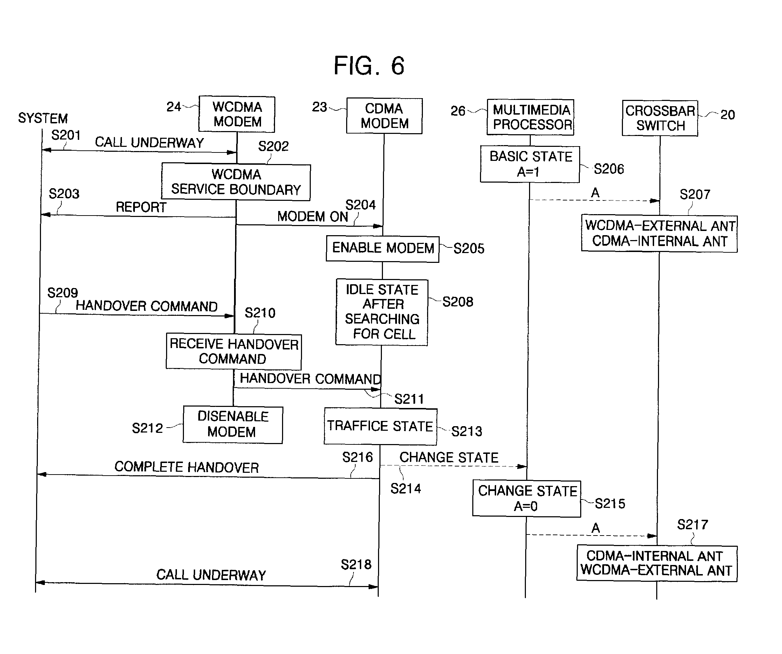

An exemplary control method of the crossbar switch based on an exemplary implementation of a handover process corresponding to the above exemplary operation according to an embodiment of the present invention will be described step by step with reference to Fig. 6.

Fig. 6 is a flowchart illustrating internal operation of the mobile communication terminal according to an exemplary embodiment of the present invention in the handover.

As shown in Fig. 6, first, when the WCDMA modem 24 detects that the terminal is located in the WCDMA service boundary area during a call using the WCDMA modem 24 at steps S201 and S202, it transmits the handover request message to the system and simultaneously provides a message for enabling the CDMA modem 23 to the CDMA modem 23 at steps S203 and S204.

At this time, the multimedia processor 26 provides the switching control signal to the crossbar switch 20, and controls the switching to connect the external antenna to the WCDMA modem 24 and connect the internal antenna to the CDMA modem 23 at steps S206 and S207. In other words, in a WCDMA service area, the basic state in which the external antenna is connected to the WCDMA modem 24 can be maintained.

Consequently, the CDMA modem 23 is enabled in response to the modem-on message provided to the WCDMA modem 24, searches for the best cell, and enters an idle state at steps S205 and 5208.

Upon receipt of the handover command message from the system, the WCDMA modem 24 provides the received handover command message to the CDMA modem 23 at steps S209, S210 and 5211.

Accordingly, after the CDMA modem 23 establishes the traffic channel with the system in response to the handover command message received from the WCDMA modem 24, and transmits a handover completion message to the system, it provides a message reporting a state change of the crossbar switch 20 to the multimedia processor 26 at steps 5213, 5216 and 5214.

At this time, the multimedia processor 26 provides the switching control signal to the crossbar switch 20 in response to the state change message provided from the CDMA modem 23, and changes the state of the crossbar switch 20 at steps S215 and S217. The multimedia processor 26 also disables WCDMA modem 24 at step S212. In other words, the multimedia processor 26 controls the crossbar switch 20 to connect the external antenna to the CDMA modem 23 and connect the internal antenna to the WCDMA modem 24.

In detail, the multimedia processor 26 controls the on/off switches 20a and 20d to be turned on and the on/off switches 20b and 20c to be turned off, and thereby connects the external antenna with the CDMA modem 23 and connecting the internal antenna with the WCDMA modem 24.

If the state of the crossbar switch 20 is changed as above, the CDMA modem 23 takes over the call by communicating with the system through the network over the established traffic channel at step S218.

Consequently, in the exemplary implementation of a mobile communication terminal and the control method thereof according to the present invention, the mobile communication terminal comprises the internal and external antennas to connect with an initial WCDMA network so that during the call, the external antenna is connected to the WCDMA modem 24, thereby improving the reception performance. And, in the handover from the WCDMA network to the CDMA network, the crossbar switch 20 is controlled to switch the external antenna to the CDMA modem 23, thereby improving the reception performance in CDMA communication.

In the above exemplary embodiments, antennas are installed inside and outside of the terminal as an example that is not intended to limit the scope of the present invention. It should be understood that a plurality of antennas having different reception performances can be installed inside or outside, and in a handover between network systems having different frequency bands, the handed-over system modem can be switched to an antenna having superior reception performance. In other words, the reception performance of the antenna can be determined in consideration of a type, a reception gain, and the like of the antenna, and an antenna having superior reception performance is previously established in the multimedia processor 26 of Fig. 4 so that when a handover occurs, the micro processor 26 can control the crossbar switch 26 to switch the handed-over system modem to the established antenna.

Further, while the above exemplary embodiments pertain to a multi-mode multi-band (MMMB) terminal comprising the WCDMA and CDMA communication modems having the different frequency bands, it will be understood by those skilled in the art that the present invention is also applicable to a terminal comprising other communication modems having different frequency bands. Accordingly, the scope of the present invention is determined by the following claims.

As described above, in the exemplary implementation of a mobile communication terminal and control method thereof according to the present invention, the mobile communication terminal comprises the internal and external antennas and controls the crossbar switch so that the external antenna is connected to the WCDMA modem and the internal antenna is connected to the CDMA modem in an initial state in a WCDMA system. When there is a handover to the CDMA network, the WCDMA modem is disenabled and the CDMA modem enters the traffic state to enable communication of the voice traffic signal. At this time, the CDMA modem transmits the internal message about the state change to the multimedia processor. The multimedia processor receives the internal message, and provides the switching control signal to the crossbar switch to connect the external antenna to the CDMA modem, thereby communicating the CDMA frequency band signal through the external antenna.

Accordingly, if the exemplary implementations of the present invention employ the MMMB terminal, even when the CDMA and WCDMA frequency bands are close, simultaneous communication with the WCDMA and CDMA systems can be achieved, thereby implementing the WCDMA-to-CDMA handover with a low call drop and a high success rate.

Further, the external and internal antennas are used together, thereby improving the terminal's appearance and improving marketability.

Furthermore, the internal antenna having inferior reception performance can be used for a short time and then switched to the external antenna to prevent communication quality deterioration regardless of what system is connected to.

Additionally, since it does not matter if the reception performance of the internal antenna is somewhat low, the size of the antenna can be reduced to facilitate overall terminal size reduction.

While the present invention has been described with reference to exemplary embodiments thereof, it will be understood by those skilled in the art that various changes in form and detail may be made therein without departing from the spirit and scope of the present invention as defined by the following claims.

## Claims

1. A mobile communication terminal comprising:
a plurality of antennas for receiving signals from systems having different frequency bands;
a plurality of system modems for communicating with the systems having the different frequency bands, respectively;
a switching unit for selectively connecting the plurality of antennas with the plurality of system modems; and
a controller for, in a handover between the systems comprising the different frequency bands, controlling the switching unit to connect the system modem of a handed-over system to a predetermined one of the plurality of the antennas.

2. The terminal according to claim 1, wherein the switching unit is positioned between the plurality of antennas and the plurality of system modems.

3. The terminal according to claim 1, wherein the switching unit is a crossbar switch comprising an on/off switch.

4. The terminal according to claim 1, wherein when the a first system modem in plurality of system modem detects service boundary area of a first network system during communication, the first system modem transmits a handover request message to the first network system and transmits a modem-on message to a second system modem in plurality of system modem, and upon receipt of a handover command message from the first network system, the first system modem transmits the received handover command message to the second system modem and the first system modem is then disenabled.

5. The terminal according to claim 4, wherein after the second system modem in plurality of system modem receives the modem-on message from the first system modem and is enabled to search for the best cell and wait in an idle state, the second system modem establishes a traffic channel with a second network system through a network in response to the handover command message provided from the first system modem, and communicates with the second network system through the network.

6. The terminal according to claim 5, wherein the first system modem comprises WCDMA modem for communicating with a Wideband Code Division Multiple Access (WCDMA) network system, and the second system modem comprises a CDMA modem for communicating with a Code Division Multiple Access (CDMA) network system

7. The terminal according to claim 1, wherein the plurality of antennas comprises the same or different reception performance and is installed inside and outside of the mobile communication terminal.

8. The terminal according to claim 1, wherein the predetermined antenna comprise an external antenna.

9. A mobile communication terminal comprising:
system modems for communicating with systems comprising different frequency bands; and a plurality of antennas connected to the system modems respectively for receiving a signal of a corresponding frequency band, and providing the received signal to a corresponding modem.

10. The terminal according to claim 9, wherein the plurality of antennas is installed inside and outside of a terminal case.

11. The terminal according to claim 9, wherein a first modem in system modems is connected with an external antenna and a second modem is connected with an internal antenna.

12. The terminal according to claim 11, further comprising a controller for, in handover from the system having a first frequency band to the system having a second frequency band, connecting the first modem with the internal antenna and connecting the second modem with the external antenna.

13. The terminal according to claim 12, wherein the first modem comprises a Wideband Code Division Multiple Access (WCDMA) modem for communicating with a system comprising a WCDMA frequency band; and the second modem comprises a Code Division Multiple Access (CDMA) modem for communicating with a system comprising a CDMA frequency band.

14. A method of controlling antenna switching in a mobile communication terminal having a plurality of antennas, the method comprising:
when the terminal enters a service area of a second mobile communication system comprising a different frequency band while the terminal communicates with a first mobile communication system using a first communication modem, enabling a second communication modem for communicating with the second mobile communication system, and establishing a traffic channel with the second mobile communication system; and controlling antenna switching so that a first antenna with a higher reception performance among the plurality of antennas is connected to the enabled second communication modem, and a second antenna with a lower reception performance than the first antenna is connected to the first communication modem.

15. The method of claim 14, wherein the first modem is a Wideband Code Division Multiple Access (WCDMA) modem and the second modem is a Code Division Multiple Access (CDMA) modem.

16. The method of claim 14, wherein the first mobile communication system comprises a Wideband Code Division Multiple Access (WCDMA) system and the second mobile communication system comprises a Code Division Multiple Access (CDMA) system.

17. The method of claim 14, wherein the switching between the first and second antennas is performed using a crossbar switch comprising a plurality of on/off switches.

18. The method of claim 14, wherein the plurality of antennas comprises the same or different reception performance and is installed inside and outside of the mobile communication terminal.

19. A method of controlling antenna switching in a mobile communication terminal comprising a plurality of system modems for communicating with respective systems comprising different frequency bands, and a plurality of antennas for receiving different frequency band signals and providing the received frequency band signals to the respective system modems, the method comprising:
when a first system modem undergoing communication determines that a current location of the terminal is in a boundary area of a service frequency band of a first mobile communication system, transmitting a handover request message to the first mobile communication system and transmitting a modem-on message to a second system modem through a network;
in the second system modem receiving the modem-on message, searching for a best cell, establishing a traffic channel with the second mobile communication system through a network in response to a handover command provided from the first mobile communication system; and
controlling antenna switching such that an established first antenna having a superior reception performance among the plurality of antennas is switched to the second system modem.

20. The method according to claim 19, wherein in controlling antenna switching, a second antenna having a lower reception performance than the first antenna is switched to the first system modem.

21. The method according to claim 19, wherein the first system modem comprises a Wideband Code Division Multiple Access (WCDMA) modem and the second system modem comprises a Code Division Multiple Access (CDMA) modem.

22. The method of claim 19, wherein the plurality of antennas comprises the same or different reception performance and is installed inside and outside of the mobile communication terminal.
